# EUROPEAN PATENT APPLICATION

(11) **EP 1 607 841 A1**
(43) Date of publication of application: **21.12.2005**
(21) Application number: 04717239.0
(22) Date of filing: 04.03.2004
(51) Int. Cl.: G06F 3/00, G06F 13/00, G06F 9/06, G06F 9/445, H04L 12/28

(54) **NETWORK CONNECTION MANAGEMENT METHOD AND ELECTRONIC APPARATUS**

(30) Priority: 24.03.2003 JP 2003079882
(71) Applicant: SONY CORPORATION, Tokyo 141 (JP)
(72) Inventor: HASHI, Hiroki; C/o Sony Corporation, Shinagawa-ku, Tokyo;1410001 (JP)
(74) Representative: Merryweather, Colin Henry
(86) International application number: PCT/JP2004/002700
(87) International publication number: WO 2004/086209

(57) **Abstract**

Disclosed is a method for supervising the network connection employing an electronic apparatus employing in turn an OS (operating system) of a non-event driven system. The electronic apparatus includes a connector jack (11) for LAN, an access controller (12) for detecting that a LAN cable (22) has been connected to or disconnected from this connector jack, and a micro-computer (13). A detection output of the access controller is supplied as an interrupt signal to the micro-computer. When an interrupt by the detection output of the access controller has occurred, the micro-computer carries out the processing for connection/disconnection of the LAN cable.

## Description

### Technical Field

This invention relates to a method for supervising network connection employing an electronic apparatus employing in turn an OS (operating system) of the non-event-driven system, and to an electronic apparatus managed by this supervising method. More particularly, it relates to a method for supervising the network connection in which, when the electronic apparatus is connected to a LAN cable, the electronic apparatus may be used immediately.

This application contains subject matter related to Japanese Patent Application JP 2003-079882, filed in the Japanese Patent Office on March 24, 2003, the entire contents of which being incorporated herein by reference.

### Background Art

An audio-visual apparatus, to which contents data, such as audio data or video data, can be downloaded from an external server over a network, is currently in use. For downloading various contents data to this sort of the AV apparatus, IP (Internet Protocol) addresses need to be set for each apparatus. For automating the setting of the IP addresses, in this sort of the apparatus, the apparatus in question has to request an IP address from a DHCP (Dynamic Host Configuration Protocol) server.

To this end, on power up of an AV apparatus, it is checked whether or not the apparatus is connected to a network cable. If the apparatus has been connected to the network cable, an IP address is requested from the DHCP server. If the apparatus has not been connected to the network cable, the IP address is requested from the DHCP server when subsequently the apparatus is connected to the network cable.

If, when the AV apparatus has been powered on, the apparatus has been connected to the network cable, the particular type of the OS, installed on the AV apparatus, is not of a problem. If, when the AV apparatus has been powered on, the apparatus has not been connected to the network cable, but the OS installed on the AV apparatus is an event-driven type OS, such as Microsoft Windows (Registered Trademark), the OS notifies a user application of an event, such as connection to the network cable, via a system message, when such event has occurred, so that the needed processing can be carried out subsequently.

Meanwhile, if, on power up, the AV apparatus has not been connected to the network cable, and the OS is a non-event-driven OS, such as Linux (Registered Trademark), there is not provided a system message, such as is provided in the OS of the event driven system. Thus, in order for the user application to capture the event of the connection to the network cable, the user application has to be carrying out the polling at all times. That is, as disclosed in the Japanese Laid-Open Patent Publication 2002-300176, the bus line has to monitor a bus line at stated intervals and corresponding processing is carried out on occurrence of an event of connection of the network cable.

More concretely, since the network cable is coupled to a dedicated IC (Integrated Circuit) for a network, in the context of signal coupling, a network device driver periodically verifies the dedicated IC to detect possible linking of the IC to the network.

Alternatively, the user application periodically acquires the result of detection as to whether or not the application is linked to the aforementioned network (link information) to detect the presence/ absence of the link as the system.

However, if the user application captures the connection event to the network cable by polling, and the polling interval is shortened, the system load is increased. If, with a view to reducing the system load, the polling interval is increased, the time duration as from the time the network cable is connected to the IC until the network becomes usable, is prolonged, with the result that the user has to wait a long time until he/she is again able to use the electronic apparatus.

### Disclosure of the Invention

It is an object of the present invention to provide a novel method for supervising the network connection employing an electronic apparatus employing in turn an OS (operating system) of the non-event-driven system, whereby the problem inherent in the above-described conventional technique may be solved. It is another object of the present invention to provide an electronic apparatus supervised by the above-described method for supervising the network connection.

A method for supervising the network connection according to the present invention is a method for supervising the connection to a network of an electronic apparatus including an access controller for detecting the occurrence of electrical connection or disconnection of a network cable, and a micro-computer, in which the method comprises a step of supplying a detection output of the access controller as an interrupt signal to the micro-computer, and a step of the micro-computer executing the processing for connection or disconnection of the network cable in case there has occurred an interrupt by the detection output of the access controller.

In the method for supervising the connection of a network according to the present invention, when the access controller has detected the connection of the network cable, the micro-computer detects a link to the network and, when it is detected that the link has been established, the micro-computer executes the processing for accessing the network.

In the method for supervising the connection of a network according to the present invention, when the access controller has detected the connection of the network cable, the micro-computer executes the processing of not allowing the use of the network.

The OS in the micro-computer is a non-event-driven type OS, and setting is made so that, when the network cable is connected, the use of the network is enabled through the network cable.

An electronic apparatus according to the present invention comprises a connector jack for connection of a network cable, an access controller for detecting that electrical connection or disconnection for the network cable has occurred at the connector jack, and a micro-computer. A detection output of the access controller is supplied as an interrupt signal to the micro-computer and, when an interrupt by a detection output of the access controller has occurred, the micro-computer executes the processing for connecting or disconnecting the network cable.

In the electronic apparatus according to the present invention, when the access controller has detected the connection of the network cable, the micro-computer detects a link to the network and, when it is detected that the link has been established, the micro-computer executes the processing for accessing the network.

In the electronic apparatus according to the present invention, when the access controller has detected the disconnection of the network cable, the micro-computer executes the processing of not allowing the use of the network.

In the electronic apparatus according to the present invention, an OS in the micro-computer is a non-event-driven type OS, and setting is made so that, when the network cable is connected to the connector jack, the use of the network is enabled through the network cable.

Other objects and advantages of the present invention will become more apparent from the following explanation of preferred embodiments thereof especially when read in conjunction with the drawings.

### Brief Description of the Drawings

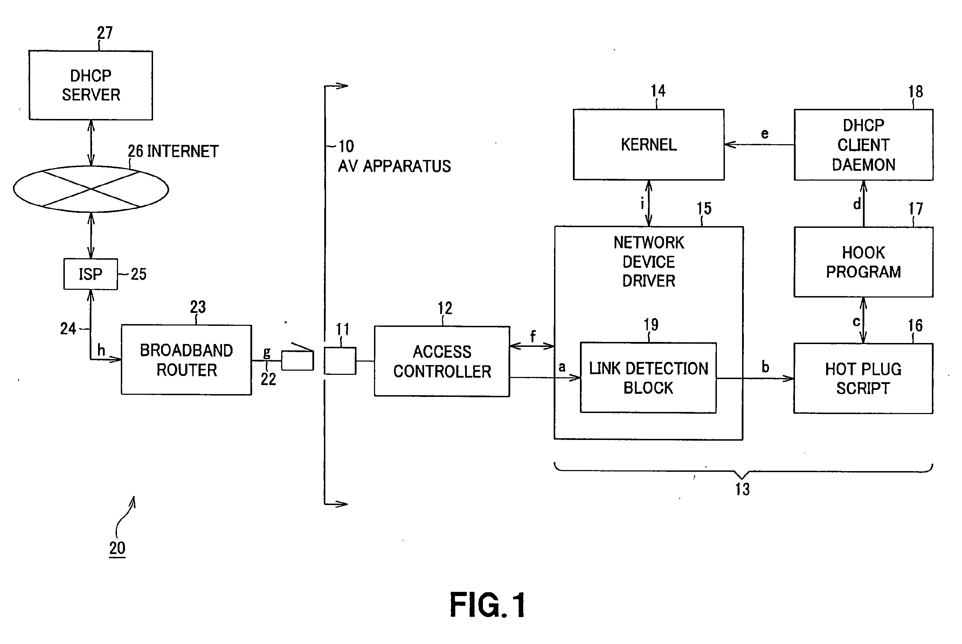

Fig.1 is a block diagram showing a network depicting the state of connecting a cable of the Ethernet (Registered Trademark) to an AV apparatus.

### Best Mode for Carrying out the Invention

Fig.1 shows the state in which an AV (audio and visual) apparatus according to the present invention has been connected to a network, and specifically shows a case in which a cable of the Ethernet (Registered Trademark) is connected to an AV apparatus having Linux (Registered Trademark) installed as OS.

According to the present invention, an AV apparatus 10 is connected to an external network 20, as shown in Fig.1.

The AV apparatus 10, connected to the network 20, includes, as hardware, a connector jack 11 for the Ethernet (Registered Trademark), an access controller 12 and a micro-computer 13 for system control. In this case, a LAN (Local Area Network) cable 22, connecting the AV apparatus 10 to the network 20, is connected to the connector jack 11, as will be explained in detail subsequently.

The access controller 12 is connected across the connector jack 11 and the micro-computer 13 to execute protocol processing necessary for connection for the Ethernet (Registered Trademark) under control by a device driver as later explained. The access controller 12 also has the function of detecting a bit string, sent from the network 20, and of notifying, in case the bit string has become available or in case the bit string has become unavailable, the available state or the unavailable state of the bit string to the micro-computer 13 by hardware interrupt.

As typical of the access controller 12, there is an IC (Integrated Circuit) 'DP83815', to distinct external pins of which are allocated a signal relevant to the protocol and a signal relevant to the connected state or the hardware interrupt.

The micro-computer 13 includes, as a part of the software, run by the micro-computer, a kernel 14, a network device driver 15, a hot plug script 16 and a DHCP (Dynamic Host Configuration Protocol) client daemon 18.

In this case, the kernel 14 may, for example, be the Kernel12.4 of the Linux (Registered Trademark). The network device driver 15 controls the access controller 12 to enable data accessing for the network 20. The network device driver 15 includes a link detection block 19 for detecting whether or not the access controller 12 has been linked in signal communication relationship to the network 20.

The hot plug script 16 is invoked by the results of detection of the link detection block 19 and, when so invoked, accepts environment variables, including the preset information, from the network device driver 15. A hook program 17 is one of plural hook programs and is run by an invoking code stated in the trailing end of the hot plug script 16. The DHCP client daemon 18 accomplishes the DHCP protocol.

In the embodiment shown in Fig.1, the network 20 is configured as follows: That is, a connector plug 21, associated with the connector jack 11, is connected to a LAN cable 22, which LAN cable 22 is connected to a broadband router 23. This broadband router 23 includes a port of the Ethernet (Registered Trademark) and a port of the ADSL (Asymmetric Digital Subscriber Line) modem, in a manner not shown. The broadband router 23 is connected over a telephone network 24 to an ISP (Internet Service Provider) 25, in accordance with the ADSL system, while being connected over the Internet 26 to a DHCP server 27.

If, in the above configuration, the connector plug 21 is inserted into the connector jack 11, a bit string, indicated at a, becomes available at a receiving contact of the connector jack 11, and is detected by the access controller 12. On detection of the bit string a, the access controller 12 produces hardware interrupt for the micro-computer 13 to notify the micro-computer 13 of the fact of the connection thereof to the LAN cable 22.

When the hardware interrupt has occurred, the micro-computer 13 detects whether or not the link detection block 19 has been boosted such that the link to the network 20 has been established. When the link to the network 20 has been established, the micro-computer invokes the hot plug script 16. At this time, an environment variable b, including the preset information, is sent from the network device driver 15 to the hot plug script 16.

When the link to the network 20 has been established and invoking c has been made, the hot plug script 16 invokes a relevant one of the plural hook programs 17, in accordance with the information of the environment variable b, sent thereto along with the invoking c.

When the invoking by the hot plug script 16 is then made, the hook program 17 prepares for using the network 20 for the kernel 14 and subsequently requests the DHCP client daemon 18 to acquire an IP (Internet Protocol) address d.

On receipt of a request e for acquisition of the IP address d, the DHCP client daemon 18 requests the network device driver 15 to acquire the IP address d via kernel 14.

The network device driver 15 sets a command f for acquisition of the IP address for the access controller 12.

The access controller 12 requests the DHCP server 27 to allocate at g the IP address over a line from the connector jack 11 to the plug 21, from the plug 21 to the LAN cable 22, from the LAN cable 22 to the broadband router 23, from the router 23 to the telephone network 24, from the telephone network 24 to the ISP 25 and from the ISP over a line of the Internet 26 to the DHCP server 27.

The DHCP server 27 imparts the IP address h, allocated to the AV apparatus 10, to the access controller 12, by a signal flow reverse to the line described above.

The kernel 14 captures, over the network device driver 15, the IP address i, imparted to the access controller 12 by the request for the allocation g of the IP address to the DHCP server 27 by the access controller 12 described above.

When the LAN cable 22 is connected to the AV apparatus 10, an IP address is allocated to the AV apparatus 10, which AV apparatus 10 is then able to use the network 20. When the connection of the LAN cable 22 is discontinued, the processing of requesting the IP address d from the connector plug 21 connected to the connector jack 11 up to the DHCP client daemon is similarly carried out. The disconnection of the LAN cable 22 is set in the kernel 14, such that the use of the network 20 is now not allowed.

In this case, when the LAN cable 22 is connected, the access controller 12 notifies the system of the fact of this connection, by hardware interrupt, so that the system load is not increased as in the case of detecting the connection of the LAN cable 22 by polling. There is also no fear that much time is taken as from the time of connection of the LAN cable 22 until the network 20 becomes usable.

Moreover, since the system load may be relieved, the CPU (central processing unit) used for the micro-computer 13 may be of an ability lower than the CPU used e.g. for a personal computer, thus enabling cost suppression. Additionally, since the access controller 12 is inherently needed for network connection, there is no necessity for adding the hardware, thus again suppressing the cost.

The foregoing explanation refers to a case where an IP address is acquired when the LAN cable 22 is connected to the AV apparatus 10. The present invention may, for example, be applied to such a case wherein, if the notebook personal computer is used in a living room, the LAN cable is bothersome for near-by persons and hence the computer is connected over wireless LAN, however, when the user carries the computer to his/her room to use the computer, it is connected to the network over a high-speed cable, because the wireless LAN is of a low speed. That is, the present invention may be applied to such a case where, in case of the connection of the LAN cable to the electronic apparatus in the power supply on state, this connection is to be effective.

The present invention is not limited to the above-described embodiment which has so far been explained with reference to the accompanying drawings. That is, various changes, substitutions or equivalents that may readily occur to those skilled in the art may be made without departing from the scope and the purport of the invention as defined in the claims.

### Industrial Applicability

According to the present invention, described above, in which the fact of network connection is detected by exploiting the hardware interrupt, and the link is established, the system load may be minimized. In addition, the network may become usable as soon as connection of the network cable is established.

## Claims

1. A method for supervising the connection to a network of an electronic apparatus including an access controller for detecting the occurrence of electrical connection or disconnection of a network cable, and a micro-computer, comprising
a step of supplying a detection output of said access controller as an interrupt signal to said micro-computer; and
a step of said micro-computer executing the processing for the connection or the disconnection of said network cable in case there has occurred an interrupt by said detection output of said access controller.

2. The method for supervising the connection of a network according to claim 1 wherein
when said access controller has detected the connection of said network cable, said micro-computer detects a link to said network, and wherein
when it is detected that said link has been established, said micro-computer executes the processing for accessing the network.

3. The method for supervising the connection of a network according to claim 1 wherein
when said access controller has detected the connection of said network cable, said micro-computer executes the processing of not allowing the use of said network.

4. The method for supervising the connection of a network according to claim 1 wherein
an OS in said micro-computer is an non-event-driven type OS; and wherein
setting is made so that, when said network cable is connected, the use of said network is enabled through said network cable.

5. An electronic apparatus comprising
a connector jack for connection of a network cable;
an access controller for detecting that electrical connection or disconnection for the network cable has occurred at said connector jack; and
a micro-computer; wherein
a detection output of said access controller is supplied as an interrupt signal to said micro-computer; and wherein
when an interrupt by a detection output of said access controller has occurred, said micro-computer executes the processing for connection or disconnection of said network cable.

6. The electronic apparatus according to claim 5 wherein
when said access controller has detected the connection of said network cable, said micro-computer detects a link to said network, and wherein
when it is detected that said link has been established, said micro-computer executes the processing for accessing the network.

7. The electronic apparatus according to claim 5 wherein
when said access controller has detected the disconnection of said network cable, said micro-computer executes the processing of not allowing the use of said network.

8. The electronic apparatus according to claim 5 wherein
an OS in said micro-computer is an non-event-driven type OS; and wherein
setting is made so that, when said network cable is connected to said connector jack, the use of said network is enabled through said network cable.
